# EUROPÄISCHE PATENTSCHRIFT

(11) **EP 3 820 650 B1**
(45) Veröffentlichungstag und Bekanntmachung des Hinweises auf die Patenterteilung: **26.03.2025**
(21) Anmeldenummer: 19733538.3
(22) Anmeldetag: 02.07.2019
(51) Int. Cl.: B25C 1/00, B25C 1/18, F16B 13/12, E04B 1/76

(54) **VERFAHREN ZUM BEFESTIGEN EINES BAUTEILS AN EINEM UNTERGRUND**
METHOD FOR FIXING A COMPONENT TO A SUBSTRATE
PROCÉDÉ DE FIXATION D'UN COMPOSANT À UN SUBSTRAT

(30) Priorität: 11.07.2018 EP 18182880
(43) Veröffentlichungstag der Anmeldung: 19.05.2021
(73) Patentinhaber: Hilti Aktiengesellschaft, 9494 Schaan (LI)
(72) Erfinder: ROSENBAUM, Ulrich, 7323 Wangs (CH); LICHTENBERG, Klaudia, 6710 Nenzing (AT); OEHRI, Kurt, 9494 Schaan (LI); ACHARYA, Rutvika Kirankumar, 6800 Feldkirch (AT)
(74) Vertreter: Hilti Aktiengesellschaft Corporate Intellectual Property
(86) Internationale Anmeldenummer: PCT/EP2019/067736
(87) Internationale Veröffentlichungsnummer: WO 2020/011602

(56) Entgegenhaltungen:
- EP-A1- 3 181 769
- EP-A2- 0 628 384
- DE-T2- 69 913 394

## Beschreibung

Die vorliegende Erfindung betrifft ein Verfahren zum Befestigen eines schichtförmigen Bauteiles an einem Untergrund.

Im Bauwesen ist es erforderlich, an Wänden oder Decken von Gebäuden als einem Untergrund einen Dämmstoff als ein insbesondere schichtförmiges Bauteil zu befestigen. Der Dämmstoff dient im Allgemeinen als Wärmedämmung für die Wand oder Decke des Gebäudes und wird außenseitig auf der Wand oder Decke befestigt. Hierzu werden Befestigungselemente mit Setzelementen, beispielsweise Nägeln, an der Wand oder Decke befestigt. Die Befestigungselemente aus Kunststoff umfassen einen Hohlschaft und einen Teller, welcher nach dem Befestigen auf einer Außenseite des Dämmstoffs aufliegt, wobei der Schaft innerhalb eines Durchgangslochs an dem Dämmstoff angeordnet ist. Der Hohlschaft umfasst einen Schaftboden mit einem Durchgang für das Setzelement, so dass das Befestigungselement mittels des Setzelementes mittelbar an dem Setzgegenstand befestigbar ist.

Um das Setzelement in den Untergrund einzutreiben, wird ein Setzgerät mit einem in einem Führungskanal geführten Eintreibelement und einem Antrieb für das Eintreibelement verwendet. Ein Energiebetrag, mit welchem das Eintreibelement von dem Antrieb beaufschlagt wird, ist üblicherweise auf das Setzelement, das Befestigungselement und den Untergrund abgestimmt, wobei Überenergie zumindest zum Teil in dem Befestigungselement und/oder in dem Setzgerät abgebaut wird und das Befestigungselement beziehungsweise das Setzgerät mechanisch belastet und unter Umständen beschädigt.

Aus DE 699 13 394 T2 ist eine Grundplatte zum Befestigen eines Elements bekannt, welche eine Aufnahmemulde für eine Schürze zur Führung eines Nagels aufweist. In der Aufnahmemulde ist eine Dämpfungsschale angeordnet und von einer ringförmigen Ausnehmung umgeben. Dadurch soll die Führungsschürze des Nagels in der Schale zu liegen kommen und einer Dämpfung dienen.

Aus EP 0 628 384 A2 ist ein Verfahren zum Setzen von Befestigungselementen mittels Setzgeräten bekannt, welches dem Befestigen von Isolationsplatten an Bauteilen dient. Ein Führungsrohr des Setzgeräts weist einen Verbindungsbereich auf, welcher eine Reibkraft erzeugen soll, um nach erfolgtem Setzvorgang eine Setzkontrolle durchzuführen.

Die Aufgabe der vorliegenden Erfindung besteht darin, ein Befestigungsverfahren zur Verfügung zu stellen, bei dem eine mechanische Belastung eines Befestigungselements und/oder eines Setzgeräts reduziert ist.

Die Aufgabe ist gelöst bei einem Verfahren entsprechend Anspruch 1.

Dabei wird eine unter Umständen auftretende Überenergie des Nagels in der Hülse abgebaut, so dass eine mechanische Belastung einer das Eintreibelement antreibenden Vorrichtung reduziert ist. Bevorzugt umfasst das Bauteil einen Dämmstoff und/oder der Untergrund eine Wand oder Decke eines Gebäudes.

Eine vorteilhafte Ausführungsform ist dadurch gekennzeichnet, dass ein Teil der Hülse durch den umlaufenden Spalt zwischen dem Nagelkopf und dem Führungskanal hindurchgedrückt wird.

Eine vorteilhafte Ausführungsform ist dadurch gekennzeichnet, dass das Eintreibelement einen Kolben umfasst, welcher einen Kolbendurchmesser aufweist, wobei der Innendurchmesser den Kolbendurchmesser übersteigt, so dass sich zwischen dem Kolben und dem Führungskanal ein weiterer umlaufender Spalt ausbildet, wobei ein Teil der Hülse in den weiteren umlaufenden Spalt zwischen dem Kolben und dem Führungskanal hineingedrückt wird.

Eine vorteilhafte Ausführungsform ist dadurch gekennzeichnet, dass sich die Hülse während des Zusammendrückens zwischen dem Nagelschaft, dem Führungskanal und dem Nagelkopf plastisch verformt.

Eine vorteilhafte Ausführungsform ist dadurch gekennzeichnet, dass sich die Hülse während des Hineindrückens eines Teils der Hülse in den umlaufenden Spalt zwischen dem Nagelkopf und dem Führungskanal plastisch verformt. Bevorzugt umfasst das Hineindrücken eines Teils der Hülse in den umlaufenden Spalt zwischen dem Nagelkopf und dem Führungskanal ein Massivumformen, besonders bevorzugt ein Extrudieren, der Hülse.

Eine vorteilhafte Ausführungsform ist dadurch gekennzeichnet, dass sich die Hülse während des Hineindrückens eines Teils der Hülse in den weiteren umlaufenden Spalt zwischen dem Kolben und dem Führungskanal plastisch verformt. Bevorzugt umfasst das Hineindrücken eines Teils der Hülse in den weiteren umlaufenden Spalt zwischen dem Kolben und dem Führungskanal ein Massivumformen, besonders bevorzugt ein Extrudieren, der Hülse.

Eine vorteilhafte Ausführungsform ist dadurch gekennzeichnet, dass sich die Hülse während des Hineindrückens eines Teils der Hülse in den umlaufenden Spalt zwischen dem Nagelkopf und dem Führungskanal elastisch verformt.

Eine vorteilhafte Ausführungsform ist dadurch gekennzeichnet, dass sich die Hülse während des Hineindrückens eines Teils der Hülse in den weiteren umlaufenden Spalt zwischen dem Kolben und dem Führungskanal elastisch verformt.

Eine vorteilhafte Ausführungsform ist dadurch gekennzeichnet, dass der Schaftboden einen Durchgang für den Nagelschaft aufweist.

Eine vorteilhafte Ausführungsform ist dadurch gekennzeichnet, dass ein kraftbetriebenes Setzgerät zur Verfügung gestellt wird, aufweisend den Führungskanal, das Eintreibelement und einen Antrieb für das Eintreibelement, wobei der Führungskanal das Eintreibelement in allen Positionen des Eintreibelements in der Eintreibrichtung überragt.

Eine vorteilhafte Ausführungsform ist dadurch gekennzeichnet, dass die Hülse im Wesentlichen aus bevorzugt thermoplastischem Kunststoff besteht.

Eine vorteilhafte Ausführungsform ist dadurch gekennzeichnet, dass der Nagel, das Eintreibelement und/oder der Führungskanal im Wesentlichen aus einem Metall oder einer Legierung, bevorzugt Stahl, bestehen.

Im Nachfolgenden werden Ausführungsbeispiele der Erfindung unter Bezugnahme auf die beigefügten Zeichnungen näher beschrieben. Es zeigen:
- Fig. 1: einen teilweisen Längsschnitt eines Befestigungselements zu Beginn eines Befestigungsverfahrens und
- Fig. 2: einen teilweisen Längsschnitt des Befestigungselementes gemäß Fig. 1 am Ende des Befestigungsverfahrens.

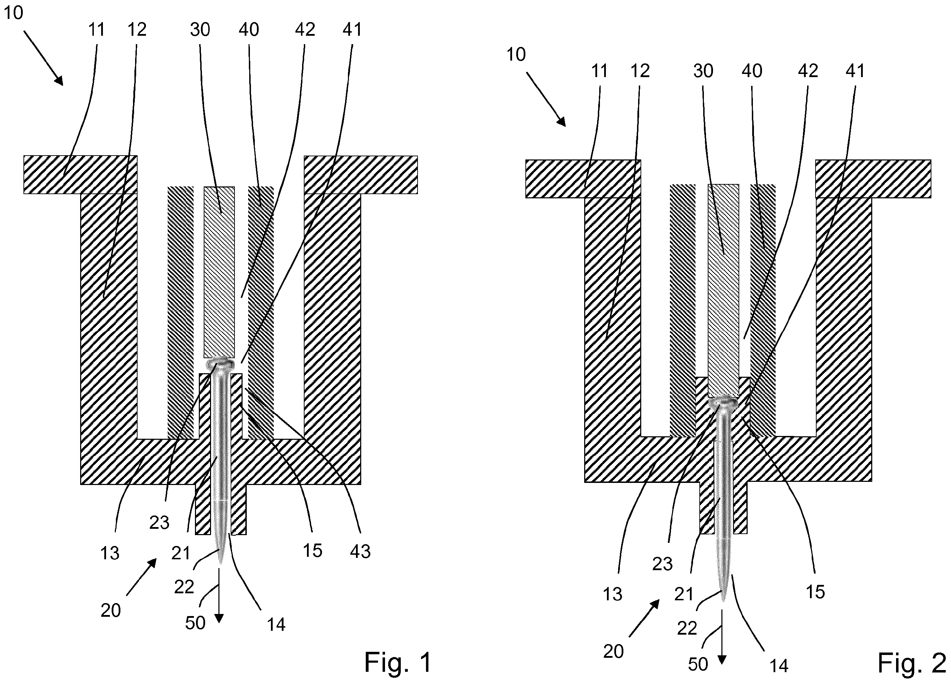

In Fig. 1 sind ein Befestigungselement 10 und ein Nagel 20 sowie ein Eintreibelement 30 und ein Führungskanal 40 in einem Längsschnitt teilweise dargestellt.

Das Befestigungselement 10 weist einen Teller 11 zum Halten eines nicht gezeigten Bauteils gegen einen ebenfalls nicht gezeigten Untergrund, einen von dem Teller 11 abragenden Hohlschaft 12 mit einem Schaftboden 13 und eine von dem Schaftboden 13 abragende Hülse 15 auf. Der Schaftboden 13 weist einen Durchgang 14 für den Nagel 20 auf. Die Hülse 15, bevorzugt das gesamte Befestigungselement 10, besteht im Wesentlichen aus einem thermoplastischen Kunststoff.

Der Nagel 20 umfasst einen Nagelschaft 21 mit einer Nagelspitze 22 und einen Nagelkopf 23 mit einem Kopfdurchmesser aufweist, welcher den Nagelschaft 21 überragt. Der Nagel 20 ist in dem Durchgang 14 vormontiert, so dass die Hülse 15 an dem Nagelschaft 21 angeordnet ist und den Nagelschaft 21 umgibt. Der Nagel 20 besteht im Wesentlichen aus Stahl.

Das Eintreibelement 30 und der Führungskanal 40 bestehen ebenfalls im Wesentlichen aus Stahl und sind Teil eines nicht weiter dargestellten Setzgeräts, welches weiterhin einen Antrieb für das Eintreibelement umfasst. Das Eintreibelement 30 besteht aus einem Kolben mit einem Kolbendurchmesser, welcher in etwa so gross ist wie der Kopfdurchmesser des Nagelkopfs 23.

Der Führungskanal 40 weist einen Innendurchmesser auf, welcher den Kopfdurchmesser des Nagelkopfs 23 und den Kolbendurchmesser des Eintreibelements 30 übersteigt, so dass sich einerseits zwischen dem Nagelkopf 23 und dem Führungskanal 40 ein umlaufender Spalt 41 ausbildet, und andererseits zwischen dem Eintreibelement 30 und dem Führungskanal 40 ein weiterer umlaufender Spalt 42 ausbildet. Der umlaufende Spalt 41 und/oder der weitere umlaufende Spalt 42 weisen jeweils eine Spaltbreite auf, welche bevorzugt zwischen 0,5 mm und 1,5 mm, beispielsweise 0,8 mm beträgt. Der Führungskanal 40 überragt das Eintreibelement 30 in allen Positionen des Eintreibelements in einer Eintreibrichtung 50, so dass das Befestigungselement 10 nicht durch den Nagel 20 beschädigt wird, wenn der Nagel in der Befestigungsrichtung 50 in den Untergrund eingetrieben wird.

Zu Beginn eines Befestigungsverfahrens wird der Führungskanal 40 in den Hohlschaft 12 eingeführt, bis der Führungskanal 40 an dem Schaftboden 13 anliegt, so dass die Hülse 15 und der Nagelkopf 23 in dem Führungskanal angeordnet sind. Dabei bildet sich ein Hohlraum 43 zwischen dem Nagelschaft 21, dem Führungskanal 40 und dem Nagelkopf 23 aus, in welchem sich die Hülse 15 befindet. Sobald das nicht gezeigte Setzgerät ausgelöst wird, treibt der Antrieb des Setzgeräts das Eintreibelement 30 durch den Führungskanal 40 auf den Nagelkopf 23 zu an, um den Nagel 20 in der Eintreibrichtung 50 auf den Untergrund zu zu bewegen und in den Untergrund einzutreiben.

In Fig. 2 sind das Befestigungselement 10, der Nagel 20, das Eintreibelement 30 und der Führungskanal 40 am Ende des Befestigungsverfahrens dargestellt. Durch die Bewegung des Nagels 20 mit dem Nagelkopf 23 auf den Untergrund zu wurde die Hülse 15 zwischen dem Nagelschaft 21, dem Führungskanal 40 und dem Nagelkopf 23 zusammengedrückt. Die Hülse 15 ist plastisch verformt und füllt den Hohlraum 43 zwischen dem Nagelschaft 21, dem Führungskanal 40 und dem Nagelkopf 23 vollständig aus. Weiterhin wurde ein Teil der Hülse 15 durch den umlaufenden Spalt 41 zwischen dem Nagelkopf 23 und dem Führungskanal 40 hindurch- in den weiteren umlaufenden Spalt 42 zwischen dem Eintreibelement 30 und dem Führungskanal 40 hineingedrückt. Dabei wurde die Hülse 15 ebenfalls plastisch verformt, insbesondere extrudiert. Ein Teil der Verformung der Hülse 15 ist eine elastische Verformung, wodurch die Hülse 15 mit einer Vorspannung von aussen an dem Nagelkopf 23 anliegt und den Nagelkopf 23 umgreift, wenn das Eintreibelement 30 aus dem Hohlschaft 12 des Befestigungselements 10 herausgezogen wird. Durch diesen Kraft- und Formschluss ist die Befestigungsqualität unter Umständen verbessert.

Die Erfindung wurde am Beispiel eines Verfahrens zur Befestigung insbesondere eines Dämmstoffs an einer Wand oder Decke eines Gebäudes beschrieben. Es wird jedoch darauf hingewiesen, dass die Erfindung auch für andere Zwecke geeignet ist.

## Patentansprüche

1. Verfahren zum Befestigen eines Bauteils, insbesondere eines Dämmstoffs, an einem Untergrund, insbesondere an einer Wand oder Decke eines Gebäudes, das Verfahren umfassend:
- Zur-Verfügung-Stellen eines Nagels (20) mit einem Nagelschaft (21) und einem Nagelkopf (23), wobei der Nagelkopf (23) einen Kopfdurchmesser aufweist, welcher den Nagelschaft (21) überragt,
- Zur-Verfügung-Stellen eines Befestigungselements (10), aufweisend einen Teller (11) zum Halten des Bauteils, einen von dem Teller abragenden Hohlschaft (12) mit einem Schaftboden (13), und eine Hülse (15), wobei die Hülse (15) von dem Schaftboden (13) abragt,
- Anordnen des Nagelschafts (21) in der Hülse (15),
- Zur-Verfügung-Stellen eines Eintreibelements (30) und eines Führungskanals (40), wobei der Führungskanal (40) einen Innendurchmesser aufweist, welcher den Kopfdurchmesser übersteigt,
- Einführen des Führungskanals (40) in den Hohlschaft (12), bis der Führungskanal (40) an dem Schaftboden (13) anliegt und der Nagelkopf (23) und die Hülse (15) in dem Führungskanal (40) angeordnet sind, so dass sich zwischen dem Nagelkopf (23) und dem Führungskanal (40) ein umlaufender Spalt (41) ausbildet,
- Antreiben des Eintreibelements (30) durch den Führungskanal (40) auf den Nagelkopf (23) zu, um den Nagel (20) in einer Eintreibrichtung auf den Untergrund zu zu bewegen,
- Zusammendrücken der Hülse (15) zwischen dem Nagelschaft (21), dem Führungskanal (40) und dem Nagelkopf (23), während sich der Nagel (20) auf den Untergrund zu bewegt, und
- Hineindrücken eines Teils der Hülse (15) in den umlaufenden Spalt (41) zwischen dem Nagelkopf (23) und dem Führungskanal (40)
- wobei die Hülse (15) während des Zusammendrückens zwischen dem Nagelschaft (21), dem Führungskanal (40) und dem Nagelkopf (23) einen Hohlraum zwischen dem Nagelschaft (21), dem Führungskanal (40) und dem Nagelkopf (23) vollständig ausfüllt.

2. Verfahren nach Anspruch 1, weiterhin umfassend:
- Hindurchdrücken eines Teils der Hülse (15) durch den umlaufenden Spalt (41) zwischen dem Nagelkopf (23) und dem Führungskanal (40).

3. Verfahren nach einem der vorhergehenden Ansprüche, wobei das Eintreibelement (30) einen Kolben umfasst, welcher einen Kolbendurchmesser aufweist, wobei der Innendurchmesser des Führungskanals (40) den Kolbendurchmesser übersteigt, so dass sich zwischen dem Kolben und dem Führungskanal (40) ein weiterer umlaufender Spalt (42) ausbildet, das Verfahren weiterhin umfassend:
- Hineindrücken eines Teils der Hülse (15) in den weiteren umlaufenden Spalt (42) zwischen dem Kolben und dem Führungskanal (40).

4. Verfahren nach einem der vorhergehenden Ansprüche, wobei sich die Hülse (15) während des Zusammendrückens zwischen dem Nagelschaft (21), dem Führungskanal (40) und dem Nagelkopf (23) plastisch verformt.

5. Verfahren nach einem der vorhergehenden Ansprüche, wobei sich die Hülse (15) während des Hineindrückens eines Teils der Hülse (15) in den umlaufenden Spalt (41) zwischen dem Nagelkopf (23) und dem Führungskanal (40) plastisch verformt.

6. Verfahren nach Anspruch 5, wobei das Hineindrücken eines Teils der Hülse (15) in den umlaufenden Spalt (41) zwischen dem Nagelkopf (23) und dem Führungskanal (40) ein Massivumformen, insbesondere ein Extrudieren, der Hülse (15) umfasst.

7. Verfahren nach einem der vorhergehenden Ansprüche, wobei sich die Hülse (15) während des Hineindrückens eines Teils der Hülse (15) in den weiteren umlaufenden Spalt (42) zwischen dem Kolben und dem Führungskanal (40) plastisch verformt.

8. Verfahren nach Anspruch 7, wobei das Hineindrücken eines Teils der Hülse (15) in den weiteren umlaufenden Spalt (42) zwischen dem Kolben und dem Führungskanal (40) ein Massivumformen, insbesondere ein Extrudieren, der Hülse (15) umfasst.

9. Verfahren nach einem der vorhergehenden Ansprüche, wobei sich die Hülse (15) während des Hineindrückens eines Teils der Hülse (15) in den umlaufenden Spalt (41) zwischen dem Nagelkopf (23) und dem Führungskanal (40) elastisch verformt.

10. Verfahren nach einem der vorhergehenden Ansprüche, wobei sich die Hülse (15) während des Hineindrückens eines Teils der Hülse (15) in den weiteren umlaufenden Spalt (42) zwischen dem Kolben und dem Führungskanal (40) elastisch verformt.

11. Verfahren nach einem der vorhergehenden Ansprüche, wobei der Schaftboden (13) einen Durchgang (14) für den Nagelschaft (21) aufweist.

12. Verfahren nach einem der vorhergehenden Ansprüche, weiterhin umfassend:
- Zur-Verfügung-Stellen eines kraftbetriebenen Setzgeräts, aufweisend den Führungskanal (40), das Eintreibelement (30) und einen Antrieb für das Eintreibelement (30), wobei der Führungskanal (40) das Eintreibelement (30) in allen Positionen des Eintreibelements (30) in der Eintreibrichtung überragt.

13. Verfahren nach einem der vorhergehenden Ansprüche, wobei die Hülse (15) im Wesentlichen aus insbesondere thermoplastischem Kunststoff besteht.

14. Verfahren nach einem der vorhergehenden Ansprüche, wobei der Nagel (20), das Eintreibelement (30) und/oder der Führungskanal (40) im Wesentlichen aus einem Metall oder einer Legierung, insbesondere Stahl, bestehen.

## Claims

1. Method for securing a component, in particular an insulating material, to a substrate, in particular to a wall or ceiling of a building, the method comprising:
- providing a nail (20) having a nail shank (21) and a nail head (23), wherein the nail head (23) has a head diameter which projects beyond the nail shank (21),
- providing a fastening element (10) having a plate (11) for holding the component, a hollow shaft (12) which projects from the plate and has a shaft bottom (13), and a sleeve (15), wherein the sleeve (15) projects from the shaft bottom (13),
- disposing the nail shank (21) in the sleeve (15),
- providing a driving-in element (30) and a guide channel (40), wherein the guide channel (40) has an internal diameter which exceeds the head diameter,
- introducing the guide channel (40) into the hollow shaft (12) until the guide channel (40) rests against the shaft bottom (13) and the nail head (23) and the sleeve (15) are arranged in the guide channel (40) in such a way that an encircling gap (41) is formed between the nail head (23) and the guide channel (40),
- driving the driving-in element (30) through the guide channel (40) onto the nail head (23) in order to move the nail (20) in a driving direction to the substrate,
- compressing the sleeve (15) between the nail shank (21), the guide channel (40) and the nail head (23) while the nail (20) moves toward the substrate, and
- pushing part of the sleeve (15) into the encircling gap (41) between the nail head (23) and the guide channel (40),
- wherein the sleeve (15) completely fills a cavity between the nail shank (21), the guide channel (40) and the nail head (23) during compression between the nail shank (21), the guide channel (40) and the nail head (23).

2. Method according to Claim 1, furthermore comprising:
- pushing part of the sleeve (15) through the encircling gap (41) between the nail head (23) and the guide channel (40).

3. Method according to one of the preceding claims, wherein the driving-in element (30) comprises a piston which has a piston diameter, wherein the internal diameter of the guide channel (40) exceeds the piston diameter, in such a way that an additional encircling gap (42) is formed between the piston and the guide channel (40), the method further comprising:
- pushing part of the sleeve (15) into the additional encircling gap (42) between the piston and the guide channel (40).

4. Method according to one of the preceding claims, wherein the sleeve (15) is plastically deformed during the compression between the nail shank (21), the guide channel (40) and the nail head (23).

5. Method according to one of the preceding claims, wherein the sleeve (15) is plastically deformed while pushing part of the sleeve (15) into the encircling gap (41) between the nail head (23) and the guide channel (40).

6. Method according to Claim 5, wherein the pushing of part of the sleeve (15) into the encircling gap (41) between the nail head (23) and the guide channel (40) comprises massive forming, in particular extruding, of the sleeve (15).

7. Method according to one of the preceding claims, wherein the sleeve (15) is plastically deformed while pushing part of the sleeve (15) into the additional encircling gap (42) between the piston and the guide channel (40).

8. Method according to Claim 7, wherein pushing part of the sleeve (15) into the additional encircling gap (42) between the piston and the guide channel (40) comprises massive forming, in particular extruding, of the sleeve (15).

9. Method according to one of the preceding claims, wherein the sleeve (15) is elastically deformed while pushing part of the sleeve (15) into the encircling gap (41) between the nail head (23) and the guide channel (40).

10. Method according to one of the preceding claims, wherein the sleeve (15) is elastically deformed while pushing part of the sleeve (15) into the additional encircling gap (42) between the piston and the guide channel (40).

11. Method according to one of the preceding claims, wherein the shaft bottom (13) has a passage (14) for the nail shank (21).

12. Method according to one of the preceding claims, furthermore comprising:
- providing a power-operated setting device, having the guide channel (40), the driving-in element (30) and a drive for the driving-in element (30), wherein the guide channel (40) projects beyond the driving-in element (30) in the driving-in direction in all positions of the driving-in element (30).

13. Method according to one of the preceding claims, wherein the sleeve (15) consists substantially of an in particular thermoplastic plastics material.

14. Method according to one of the preceding claims, wherein the nail (20), the driving-in element (30) and/or the guide channel (40) consist substantially of a metal or an alloy, in particular steel.

## Revendications

1. Procédé de fixation d'un élément de construction, en particulier d'un matériau isolant, sur un support, en particulier sur un mur ou un plafond d'un bâtiment, le procédé comprenant :
- le fait de fournir un clou (20) avec une tige de clou (21) et une tête de clou (23), la tête de clou (23) présentant un diamètre de tête qui dépasse la tige de clou (21),
- le fait de fournir un élément de fixation (10) comprenant une plaque (11) pour maintenir l'élément de construction, une tige creuse (12) faisant saillie de la plaque et ayant un fond de tige (13), et un manchon (15), le manchon (15) faisant saillie du fond de tige (13),
- le fait de placer la tige de clou (21) dans le manchon (15),
- le fait de fournir un élément d'enfoncement (30) et un canal de guidage (40), le canal de guidage (40) ayant un diamètre intérieur qui dépasse le diamètre de la tête,
- le fait d'introduire le canal de guidage (40) dans la tige creuse (12) jusqu'à ce que le canal de guidage (40) soit en contact avec le fond (13) de la tige et que la tête de clou (23) et le manchon (15) soient agencés dans le canal de guidage (40), de sorte qu'un interstice circonférentiel (41) soit formé entre la tête de clou (23) et le canal de guidage (40),
- le fait d'entraîner l'élément d'enfoncement (30) à travers le canal de guidage (40) vers la tête de clou (23) afin de déplacer le clou (20) dans une direction d'enfoncement vers le substrat,
- le fait de comprimer le manchon (15) entre la tige de clou (21), le canal de guidage (40) et la tête de clou (23) pendant que le clou (20) se déplace vers le substrat, et
- le fait d'enfoncer une partie du manchon (15) dans l'interstice circonférentiel (41) entre la tête de clou (23) et le canal de guidage (40),
- le manchon (15) remplissant complètement une cavité située entre la tige de clou (21), le canal de guidage (40) et la tête de clou (23) pendant l'écrasement entre la tige de clou (21), le canal de guidage (40) et la tête de clou (23).

2. Procédé selon la revendication 1, comprenant en outre :
- le fait de pousser une partie du manchon (15) à travers l'interstice circonférentiel (41) entre la tête de clou (23) et le canal de guidage (40).

3. Procédé selon l'une des revendications précédentes, dans lequel l'élément d'enfoncement (30) comprend un piston qui présente un diamètre de piston, le diamètre intérieur du canal de guidage (40) dépassant le diamètre de piston, de sorte qu'un autre interstice circonférentiel (42) est formé entre le piston et le canal de guidage (40), le procédé comprenant en outre :
- le fait d'enfoncer une partie du manchon (15) dans ledit autre interstice circonférentiel (42) entre le piston et le canal de guidage (40).

4. Procédé selon l'une des revendications précédentes, dans lequel le manchon (15) se déforme plastiquement pendant la compression entre la tige de clou (21), le canal de guidage (40) et la tête de clou (23).

5. Procédé selon l'une des revendications précédentes, dans lequel le manchon (15) se déforme plastiquement pendant l'enfoncement d'une partie du manchon (15) dans l'interstice circonférentiel (41) entre la tête de clou (23) et le canal de guidage (40).

6. Procédé selon la revendication 5, dans lequel l'enfoncement d'une partie du manchon (15) dans l'interstice circonférentiel (41) entre la tête de clou (23) et le canal de guidage (40) comprend un formage massif, notamment une extrusion, du manchon (15).

7. Procédé selon l'une des revendications précédentes, dans lequel le manchon (15) subit une déformation plastique pendant l'enfoncement d'une partie du manchon (15) dans ledit autre interstice circonférentiel (42) entre le piston et le canal de guidage (40).

8. Procédé selon la revendication 7, dans lequel l'enfoncement d'une partie du manchon (15) dans ledit autre interstice circonférentiel (42) entre le piston et le canal de guidage (40) comprend un formage massif, notamment une extrusion, du manchon (15).

9. Procédé selon l'une des revendications précédentes, dans lequel le manchon (15) se déforme élastiquement pendant l'enfoncement d'une partie du manchon (15) dans l'interstice circonférentiel (41) entre la tête de clou (23) et le canal de guidage (40).

10. Procédé selon l'une des revendications précédentes, dans lequel le manchon (15) se déforme élastiquement pendant l'enfoncement d'une partie du manchon (15) dans ledit autre interstice circonférentiel (42) entre le piston et le canal de guidage (40).

11. Procédé selon l'une des revendications précédentes, dans lequel le fond de tige (13) présente un passage (14) pour la tige de clou (21).

12. Procédé selon l'une quelconque des revendications précédentes, comprenant en outre :
- le fait de fournir un outil de pose motorisé comprenant le canal de guidage (40), l'élément d'enfoncement (30) et un moyen d'entraînement pour l'élément d'enfoncement (30), le canal de guidage (40) dépassant l'élément d'enfoncement (30) dans toutes les positions de l'élément d'enfoncement (30) dans la direction d'enfoncement.

13. Procédé selon l'une des revendications précédentes, dans lequel le manchon (15) est essentiellement constitué d'une matière plastique, notamment thermoplastique.

14. Procédé selon l'une des revendications précédentes, dans lequel le clou (20), l'élément d'enfoncement (30) et/ou le canal de guidage (40) sont essentiellement constitués d'un métal ou d'un alliage, notamment d'acier.
